# EUROPÄISCHE PATENTSCHRIFT

(11) **EP 1 418 370 B1**
(45) Veröffentlichungstag und Bekanntmachung des Hinweises auf die Patenterteilung: **22.08.2007**
(21) Anmeldenummer: 03025816.4
(22) Anmeldetag: 10.11.2003
(51) Int. Cl.: F16J 15/32

(54) **Vorrichtung mit einer Dichtanordnung**
System with a sealing device
Installation avec un dispositif d'étanchéité

(30) Priorität: 11.11.2002 DE 10253885
(43) Veröffentlichungstag der Anmeldung: 12.05.2004
(73) Patentinhaber: Kaco GmbH & Co. KG, 74072 Heilbronn (DE)
(72) Erfinder: Uhrner, Klaus-Jürgen, 74211 Leingarten (DE)
(74) Vertreter: Kohl, Karl-Heinz

(56) Entgegenhaltungen:
- EP-A- 0 284 496
- DE-A- 3 420 523
- GB-A- 492 954
- GB-A- 2 167 817
- US-A- 4 327 924
- US-A- 4 526 383
- US-A- 5 209 502

## Beschreibung

Die Erfindung betrifft eine Vorrichtung mit einer Dichtanordnung sowie einem ersten, vorzugsweise ruhenden Maschinenteil und einem zweiten, vorzugsweise bewegbaren Maschinenteil nach dem Oberbegriff des Anspruches 1 sowie ein Verfahren zur Montage eines Dichtringes einer solchen Vorrichtung nach dem Oberbegriff des Anspruches 25.

Es sind Radialwellendichtringe bekannt (US-A-4 526 383, EP-A-0 284 496), die einen napfförmigen Ringkörper aufweisen, der zumindest an seiner äußeren Mantelfläche wenigstens teilweise mit einer aus elastischem Material bestehenden Ummantelung versehen ist. Sie bildet einen statischen Dichtteil, der in der Einbaulage dichtend an der Wandung des Einbauraumes anliegt. Der dynamische Dichtteil wird durch eine Ringscheibe aus Polytetrafluorethylen gebildet, die am Stützkörper befestigt werden muß. Der Dichtring ist aufwendig im Aufbau und teuer in der Herstellung. Damit eine einwandfreie statische Abdichtung erreicht wird, muß die Wandung des Einbauraumes sehr genau bearbeitet werden.

Es sind auch Dichtringe bekannt (US-A-5 209 502), bei denen an der äußeren Mantelfläche des Ringkörpers keine Ummantelung vorgesehen ist. Der dynamische Dichtteil wird ebenfalls durch eine Ringscheibe aus Polytetrafluorethylen gebildet.

Es ist weiter eine Dichtungsanordnung bekannt (US-A-4 327 924), bei der ein Dichtelement mit einer Bindefläche an Teilen eines Getriebegehäuses befestigt werden kann. Das Dichtelement besteht aus elastomerem Material und ist als Formkörper ausgebildet, der zwei koaxial zueinander liegende Ringabschnitte aufweist. Das Dichtelement ist offen ausgebildet und liegt mit einem äußeren Ringabschnitt am inneren Rand eines Getriebegehäuseteiles an, um den Durchgang von Schmiermittel vom Getriebegehäuse in die Außenumgebung zu verhindern. Die statische Abdichtung zwischen dem Dichtelement und dem Getriebegehäuse erfolgt somit auf herkömmliche Weise, wie es beispielsweise bei einem Nutring bekannt ist. Dies wiederum macht es zwingend notwendig, daß das Dichtelement eine Dichtlippe aufweist und eine geeignete Anlagefläche hat. Sie muß jedoch bearbeitet sein, um die Dichtwirkung zu erzielen.

Der Erfindung liegt die Aufgabe zugrunde, die gattungsgemäße Vorrichtung und das gattungsgemäße Verfahren so auszubilden, daß bei konstruktiv einfacher Ausbildung des Dichtringes eine einfache Montage gewährleistet ist.

Diese Aufgabe wird bei der gattungsgemäßen Vorrichtung erfindungsgemäß mit den kennzeichnenden Merkmalen des Anspruches 1 und beim gattungsgemäßen Verfahren erfindungsgemäß mit den kennzeichnenden Merkmalen des Anspruches 25 gelöst.

Bei der erfindungsgemäßen Vorrichtung wird der Dichtring ohne einen Trag- und Stützkörper am Einbauort montiert. Der Dichtring wird über die Bindeschicht unmittelbar an einem der Maschinenteile befestigt. In der Regel wird der Dichtring am ruhenden Maschinenteil befestigt, wie einem Gehäuse. Es ist aber auch möglich, den Dichtring am bewegbaren Maschinenteil zu befestigen. Da ein Trag/Stützkörper nicht vorhanden ist, wird die Ringscheibe unmittelbar am Maschinenteil gehalten. Der Dichtring läßt sich dadurch konstruktiv sehr einfach und preisgünstig herstellen und montieren. Da eine Ummantelung eines Trag/Stützkörpers nicht erforderlich ist, können die hierfür notwendigen, teuren Vulkanisiereinrichtungen entfallen. Die Befestigungsfläche am Maschinenteil muß nicht genau bearbeitet sein bzw. kann unbearbeitet bleiben, was zur kostengünstigen Montage des Dichtringes beiträgt.

Mit der Heizeinrichtung des Werkzeuges wird die Bindeschicht bei gleichzeitigem Anpressen des Dichtringes an die Befestigungsfläche des Maschinenteiles erhitzt.

Vorteilhaft ist die Bindeschicht so ausgebildet, daß durch erneutes Erhitzen die Klebekraft so verringert wird, daß der Dichtring vom Maschinenteil abgezogen werden kann.

Als Ringscheibe wird insbesondere eine Polyfluorcarbon-Scheibe, vorzugsweise eine Polytetrafluorcarbon-Scheibe, verwendet. Sie kann zumindest in dem Bereich, in dem sie am Maschinenteil befestigt wird, einer solchen Plasmabehandlung unterzogen werden, daß dieser Bereich im Mikrobereich liegende Oberflächenrauhigkeiten erhält. Die Plasmabehandlung führt infolge der Plasmaätzung zu einem Mikrosandstrahleffekt und/oder zu chemischen Veränderungen im Mikrobereich an der Oberfläche. Dieser plasmaaktivierte Bereich stellt sicher, daß die Ringscheibe zuverlässig fest mit dem Maschinenteil verbunden werden kann, ohne daß sonst übliche Ätzvorgänge mittels Lösungen erforderlich sind. Der plasmabehandelte Bereich der Ringscheibe kann unmittelbar, das heißt ohne eine haftvermittelnde Zwischenschicht, mit dem Maschinenteil verbunden werden. Selbstverständlich kann eine solche Zwischenschicht aber auch verwendet werden.

Weitere Merkmale der Erfindung ergeben sich aus den weiteren Ansprüchen, der Beschreibung und den Zeichnungen.

Die Erfindung wird nachstehend mehrerer in den Zeichnungen dargestellter Ausführungsbeispiele näher beschrieben. Es zeigt
- Fig. 1: im Axialschnitt die eine Hälfte einer ersten Ausführungsform eines erfindungsgemäßen Dichtringes,
- Fig. 2 und Fig. 3: jeweils eine weitere Ausführungsform eines erfindungsgemäßen Dichtringes in einer Darstellung entsprechend Fig. 1,
- Fig. 4: einen Teil des Dichtringes gemäß Fig. 1, der in einem Montagewerkzeug angeordnet ist,
- Fig. 5 bis 7: jeweils eine weitere Ausführungsform eines erfindungsgemäßen Dichtringes in Darstellungen entsprechend Fig. 1,
- Fig. 8: eine Stirnansicht des Dichtringes gemäß Fig. 9 vor seiner Montage,
- Fig. 9: einen Schnitt längs der Linie IX-IX in Fig. 8, in vergrößerter Darstellung,
- Fig. 10 bis 12: in einer Darstellung entsprechend Fig. 9 weitere Ausführungsformen von erfindungsgemäßen Dichtringen,
- Fig. 13: eine weitere Ausführungsform eines erfindungsgemäßen Dichtringes in einer Darstellung entsprechend Fig. 8,
- Fig. 14: in vergrößerter Darstellung einen Schnitt längs der Linie XIV-XIV in Fig. 13,
- Fig. 15: in einer Darstellung entsprechend Fig. 9 eine weitere Ausführungsform eines erfindungsgemäßen Dichtringes,
- Fig. 16 bis 18: jeweils eine weitere Ausführungsform eines erfindungsgemäßen Dichtringes in Darstellungen gemäß Fig. 1.

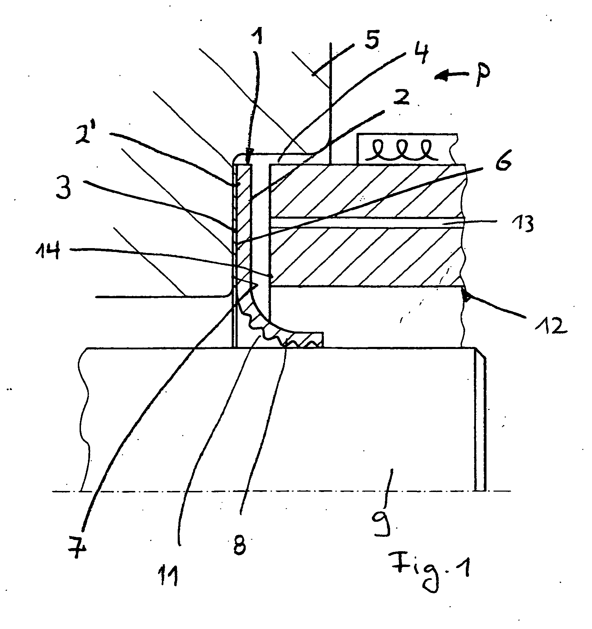

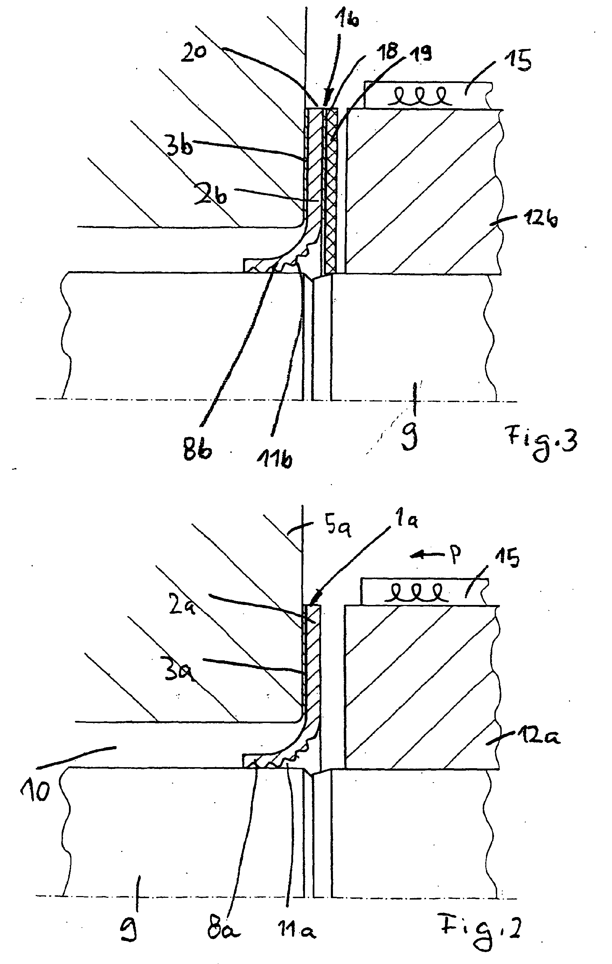

Der in den Fig. 1, 12 und 18 dargestellte Radialwellendichtring 1 ist durch eine Ringscheibe 2 (Fig. 12) gebildet, die an ihrer einen Seite 2' eine Klebeschicht 3 aufweist, mit der sie in einer stirnseitigen Vertiefung 4 eines (nicht näher dargestellten) Maschinengehäuses 5 befestigt wird. Die Ringscheibe 2 besteht vorzugsweise aus Polyfluorcarbon, insbesondere aus Polytetrafluorethylen. Sie kann selbstverständlich auch aus einem anderen geeigneten Werkstoff, wie beispielsweise elastomermodifiziertem Polytetrafluorethylen oder einem Elastomer oder dergleichen hergestellt sein. Die Ringscheibe 2 hat einen radial äußeren Ringabschnitt, der einen Befestigungsteil 6 zum Verbinden der Ringscheibe 2 mit dem Gehäuse 5 bildet. Wie Fig. 1 zeigt, ist die Ringscheibe 2 mit der Klebeschicht 3 unmittelbar an einem Boden 7 der Vertiefung 4 befestigt.

Der radial innere Ringabschnitt der Ringscheibe 2 bildet einen Dichtteil 8, mit dem die Ringscheibe 2 dichtend an einer abzudichtenden Welle 9 anliegt. Diese ragt durch eine zentrale Öffnung 10 des Gehäuses 5. Der Dichtteil 8 hat geringfügig kleinere radiale Breite als der Befestigungsteil 6. Der Dichtteil 8 weist auf der Mediumsseite 2' eine spiralig verlaufende Ringnut 11 auf. Sie bildet in bekannter Weise eine Rückfördereinrichtung für das abzudichtende Medium. Bei der in Fig. 1 dargestellten Ausführungsform ist der Dichtteil 8 gegen die Luftseite gebogen.

Zur Montage wird die Ringscheibe 2 mit einem Montagewerkzeug 12 (Fig. 1) in Montagerichtung P in die Vertiefung 4 des Gehäuses 5 eingesetzt, bis die Ringscheibe 2 mit der Klebeschicht 3 am Boden 7 der Vertiefung 4 anliegt. Zum Halten der Ringscheibe 2 ist das Werkzeug 12 an eine (nicht näher dargestellte) Vakuumeinrichtung angeschlossen und hat wenigstens eine, vorzugsweise mehrere Zuleitungen 13, die in eine ebene Stirnseite 14 des Werkzeuges münden und über die eine Saugkraft auf die Ringscheibe 2 ausgeübt wird. Mit der Vakuumeinrichtung wird die Ringscheibe 2 an das Werkzeug angesaugt und so an diesem gehalten, daß es mit dem Werkzeug in Richtung P in das Gehäuse 5 eingesetzt werden kann. Die Stirnseite 14 des Montagewerkzeuges 12 ist radial so breit, daß die Ringscheibe 2 mit ihrem Befestigungsteil 6 sicher an der Stirnseite 14 anliegen kann.

Ferner weist das Werkzeug 12 eine Heizeinrichtung 15 auf, mit der die Klebeschicht 3 erhitzt bzw. aufgeschmolzen werden kann, um die Ringscheibe 2 am Boden 7 der Vertiefung 4 zu befestigen. Während des Erwärmungsvorganges wird die Klebeschicht 3 mit dem Montagewerkzeug 12 unter ausreichendem Druck gegen den Boden 7 gedrückt. Sobald nach Abschalten der Heizeinrichtung 15 die Klebeschicht 3 ausgehärtet ist, wird die Vakuumeinrichtung abgeschaltet, so daß das Montagewerkzeug 12 zurückgezogen werden kann. Da sich die Stirnfläche 14 des Montagewerkzeuges 12 über den Umfang der Klebeschicht 3 erstreckt, wird sie gegen den Boden 7 gedrückt.

Dadurch ist sichergestellt, daß der Dichtring 1 sicher am Boden 7 befestigt ist. Die Klebeschicht 3 reicht bis zum äußeren Rand 35 des Dichtringes 1 (Fig. 12) und über wenigstens die halbe radiale Breite des Befestigungsteiles 6. Da der Dichtring 1 unmittelbar am Boden 7 befestigt wird, hat der Dichtring eine konstruktiv einfache Ausbildung. So sind zusätzliche Befestigungsteile, wie Stützkörper, nicht erforderlich. Der Dichtring 1 kann somit auch sehr preisgünstig hergestellt werden. Insbesondere muß der Boden 7 der einen Einbauraum bildenden Vertiefung 4 nicht sauber bearbeitet sein, da die Klebeschicht 3 eventuell vorhandene Rauhigkeiten des Boden 7 ausgleicht. Das Gehäuse 5 kann gegossen sein, muß nicht bearbeitet werden oder kann nur grob bearbeitet sein. Da keine engen Fertigungstoleranzen an der entsprechenden Gehäusefläche erforderlich sind, kann das Gehäuse 5 kostengünstig hergestellt werden. Durch die einfache direkte Befestigung des Dichtringes 1 am Gehäuse 5 kann die Montage mit geringem Aufwand einfach durchgeführt werden.

Soll der Dichtring 1 aus dem Gehäuse entfernt werden, kann dies wieder beispielsweise mit Hilfe des Werkzeuges 12 erfolgen. Mit der Heizeinrichtung 15 wird die Klebeschicht 3 erhitzt. Wenn die Klebeschicht aufgeschmolzen ist, kann mit dem Werkzeug, dessen Vakuumeinrichtung eingeschaltet wird, der Dichtring 1 entfernt werden.

Der in den Fig. 2 und 10 dargestellte Dichtring 1 a unterscheidet sich von dem zuvor beschriebenen Dichtring 1 dadurch, daß der Dichtteil 8a in Richtung auf die Mediumseite gebogen ist. Die Rückfördereinrichtung 11 a ist auf der Luftseite 16 des Dichtteiles 8a vorgesehen, der in die Gehäuseöffnung 10 des Gehäuses 5a ragt.

Der Dichtring 1 a ist mit seinem Befestigungsteil 6a über die Klebeschicht 3a an einer ebenen Stirnseite 17 des Gehäuses 5a befestigt. Mit dem Montagewerkzeug 12a wird die Ringscheibe 2a mit der Klebeschicht 3a an die Gehäusestirnseite 17 angepreßt und mit der Heizeinrichtung 15 die Klebeschicht 3a in der beschriebenen Weise aufgeschmolzen. Nach Erhärten der Klebeschicht 3a und Abnehmen des Werkzeuges ist der Dichtring 1 a sicher an der Gehäusestirnseite 17 befestigt, die radial in bezug auf die abzudichtende Welle 9 liegt. Das Werkzeug 12a hat im Unterschied zum Werkzeug 12 nach Fig. 1 keine Ansaugeinrichtung, so daß auch die Zuleitungen 13 entfallen.

Auch dieser Dichtring 1a läßt sich einfach und kostengünstig herstellen und montieren. Die Anschlußfläche 17 des Gehäuses 5a kann wieder unbearbeitet oder nur grob bearbeitet sein, so daß keine engen Toleranzen bei der Herstellung eingehalten werden müssen.

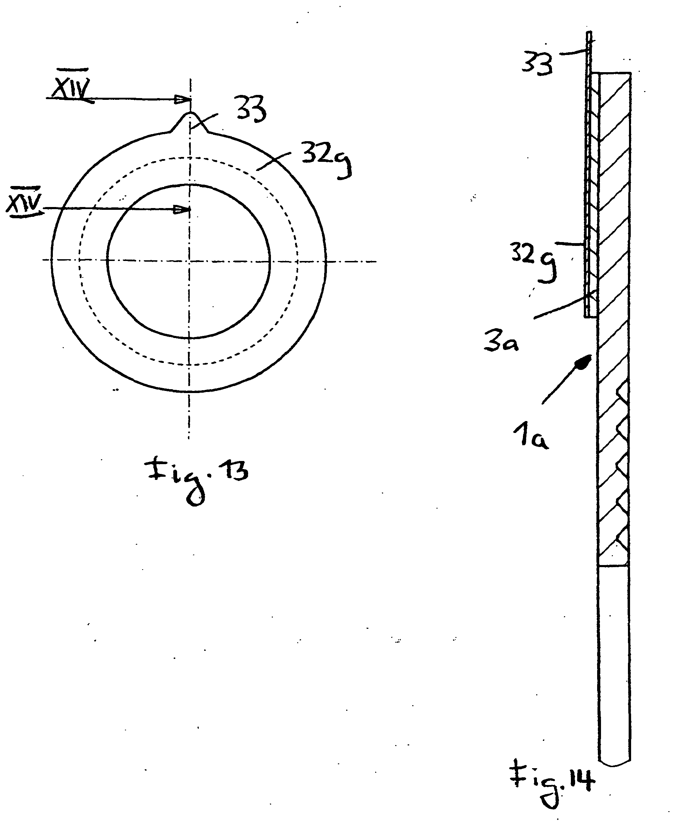

Der Dichtring 1b gemäß den Fig. 3 und 11 unterscheidet sich von dem zuvor beschriebenen Dichtring 1a dadurch, daß zusätzlich zur Klebeschicht 3b eine weitere Klebeschicht 18 auf der Luftseite 16b (Fig. 11) der Ringscheibe 2b vorgesehen ist. Mit der Klebeschicht 18 wird eine ringförmige Abdichtscheibe 19 an der Ringscheibe 2b gehalten. Die Abdichtscheibe 19 besteht vorzugsweise aus Vlies. Sie ist im Ausführungsbeispiel etwas dünner als die Ringscheibe 2b, jedoch wesentlich dicker als die Klebeschichten 3b und 18. Die Abdichtscheibe 19 hat gleichen Außendurchmesser wie die Ringscheibe 2b und erstreckt sich bis in den Bereich der Rückfördereinrichtung 11 b. Wie Fig. 11 zeigt, hat die Abdichtscheibe 19 größere radiale Breite als die beiden Klebeschichten 3b, 18, die ihrerseits radial gleich breit sind. In der Einbaulage (Fig. 3) liegt die Abdichtscheibe 19 an der Welle 9 an.

Wie Fig. 11 zeigt, erstreckt sich die Abdichtscheibe 19 bis etwa in halbe radiale Breite des Dichtteiles 8b. Die Abdichtscheibe 19 verhindert den Zutritt von Schmutz und Staubteilchen oder dergleichen.

Das Montagewerkzeug 12b für den Dichtring 1 b ist gleich ausgebildet wie das Werkzeug nach Fig. 2.

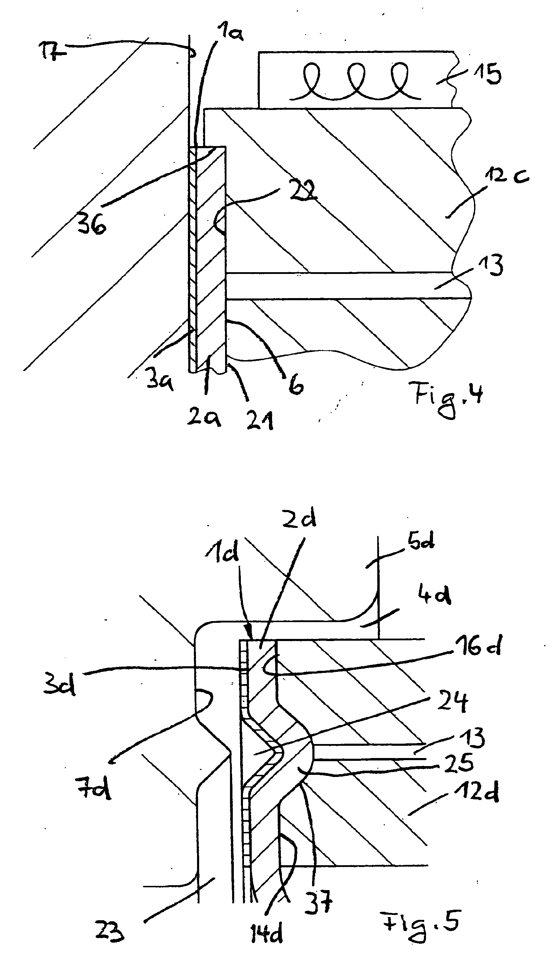

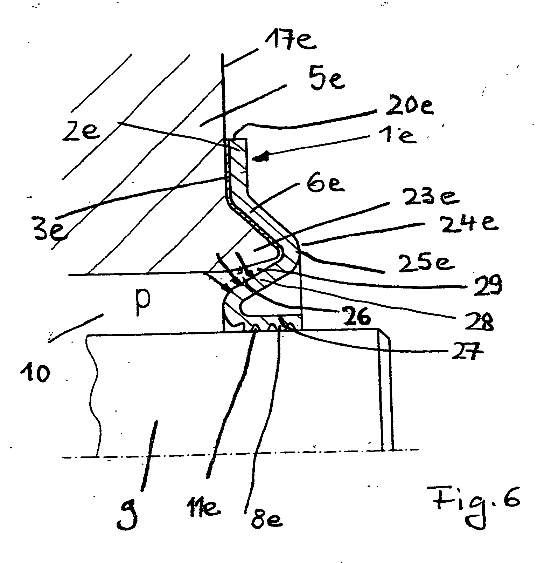

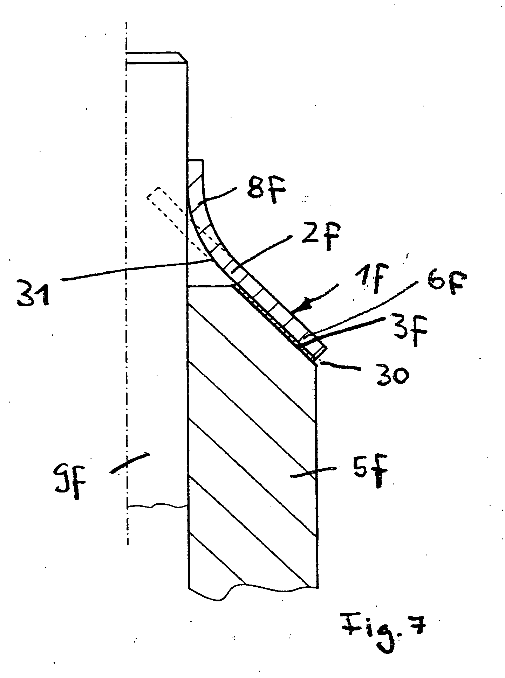

Fig. 4 zeigt die Ringscheibe 2a nach Fig. 10, die an der ebenen Stirnseite 17 des Gehäuses 5a befestigt ist. Zur Zentrierung der Dichtscheibe 2a bei der Montage weist das Montagewerkzeug 12c eine stirnseitige Vertiefung 21 auf. In ihr wird der Dichtring 1 a formschlüssig gehalten. Die Vertiefung 21 ist so ausgebildet, daß die Ringscheibe 2a mit ihrem äußeren Rand an einer Seitenwand 36 der Vertiefung 21 anliegt. Die Ringscheibe 2a liegt mit ihrer der Klebeschicht 3a gegenüberliegenden Seite 16 am Boden 22 der Vertiefung 21 an. Damit die Klebeschicht 3a zuverlässig an der Stirnseite 17 des Gehäuses 5a befestigt werden kann, ragt die Ringscheibe 2a über die Vertiefung 21. Das Montagewerkzeug 12c hat wenigstens eine, vorzugsweise mehrere über seinen Umfang verteilt angeordnete Zuleitungen 13, die an die Vakuum/Unterdruckeinrichtung angeschlossen sind. Der in der Vertiefung 21 sitzende Dichtring 1a wird bei der Montage durch Unterdruck ausreichend fest gegen den Boden 22 der Vertiefungen 21 gezogen, so daß eine einfache und sichere Befestigung des Dichtringes 1a an der Gehäusestirnseite 17 gewährleistet ist. Im übrigen ist das Montagewerkzeug 12c gleich ausgebildet wie die Ausführungsform gemäß Fig. 1. Mit dem Werkzeug 12c kann der Dichtring 1 a während der Montage radial einwandfrei gegenüber dem Gehäuse 5a ausgerichtet und gehalten werden, bis die Klebeschicht 3a erkaltet ist.

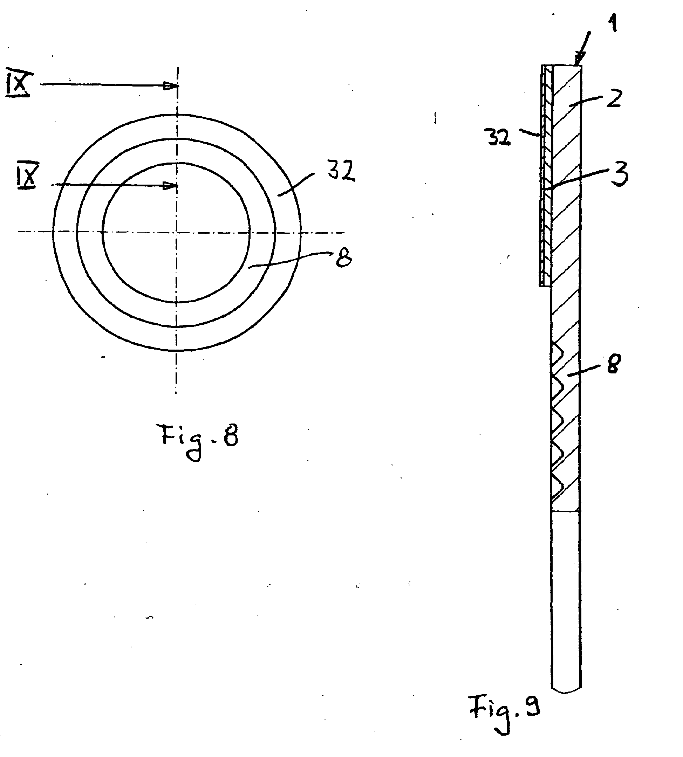

Beim Ausführungsbeispiel nach Fig. 5 hat der Boden 7d des Aufnahmeraumes 4d des Gehäuses 5d eine um die Achse des Dichtringes 1d umlaufende Nase 23, die dreieckförmigen Querschnitt hat und vorzugsweise einstückig mit dem Gehäuse 5d ausgebildet ist. Vorteilhaft ist das Gehäuse 5d mit der Nase 23 gegossen. Der Boden 7d und die Nase 23 können unbearbeitet oder auch nur grob bearbeitet sein. Eine Feinbearbeitung mit hohen Genauigkeiten ist entsprechend den vorigen Ausführungsformen nicht erforderlich.

Die Ringscheibe 2d des Dichtringes 1d ist mit einer der Nase 23 entsprechenden Vertiefung 24 versehen, in die die Nase 23 bei montiertem Dichtring 1d eingreift. Die Klebeschicht 3d ist an die Form der Ringscheibe 2d angepaßt.

Das Montagewerkzeug 12d weist an seiner Stirnseite 14d zur Aufnahme der durch die Vertiefung 24 gebildeten umlaufenden Sicke 25 des Dichtringes 1d eine umlaufende Vertiefung 37 auf, an deren Boden die Sicke 25 flächig anliegt. In die Vertiefung 37 münden die Zuleitungen 13.

Die Sicke 25 steht über die von der Klebeschicht 3d abgewandte Seite 16d der Ringscheibe 2d vor. Besteht die Ringsscheibe 2d aus Polytetrafluorethylen, wird die Sicke 25 vorteilhaft durch einen Prägevorgang hergestellt. Die Sicke 25 ist etwa in halber radialer Breite des Befestigungsteiles 6d der Ringscheibe 2d vorgesehen.

Da die Stirnseite 14d des Montagewerkzeuges 12d an die Form der Ringscheibe 2d angepaßt ist, läßt sich der Dichtring 1d problemlos am Boden 7d und an der Nase 23 der gehäuseseitigen Vertiefung 4d befestigen.

Das Montagewerkzeug 12d ist im übrigen gleich ausgebildet wie die Ausführungsform gemäß Fig. 1.

Fig. 6 zeigt einen Dichtring 1e, der an der Stirnseite 17e des Gehäuses 5e über die Klebeschicht 3e befestigt ist. Am Rand der Gehäuseöffnung 10 für die Welle 9 steht über die Stirnseite 17e ein umlaufender Vorsprung 23e vor, der im Querschnitt dreieckförmig ist und sich längs des Randes erstreckt.

Die Ringscheibe 2e des Dichtringes 1e wird mit der Klebeschicht 3e so an der Stirnseite 17 und am Vorsprung 23e des Gehäuses 5e befestigt, daß der Dichtteil 8e unter elastischer Verformung dichtend auf der Welle 9 aufliegt. Der Dichtteil 8e ist in der Einbaulage im Querschnitt v-förmig gebogen. Der Befestigungsteil 6e des Dichtringes 1e geht in Höhe der Spitze des Vorsprunges 23e bogenförmig in den Dichtteil 8e über. Aufgrund der im Querschnitt v-förmigen Ausbildung liegt der Dichtteil 8e mit ausreichend hoher Kraft an der Welle 9 an.

Die der Welle 9 zugewandte Unterseite 26 des Vorsprunges 23e liegt auf einem in Richtung auf die Luftseite sich öffnenden Kegelmantel. Dadurch wird zwischen der Unterseite 26 und dem benachbarten Abschnitt 28 des Dichtteiles 8a ein Ringspalt 29 gebildet, der sich von der Mediumsseite aus in Richtung auf den Abschnitt 28 des Dichtteiles 8e verjüngt und durch ihn gegen die Luftseite geschlossen ist. Der Abschnitt 28 geht spitzwinklig in einen in Richtung auf die Luftseite sich erstreckenden Endabschnitt 27 über, mit dem der Dichtteil 8e auf der Welle 9 aufliegt. Der Endabschnitt 27 weist die Rückfördereinrichtung 11e für das abzudichtende Medium auf. Auf der Mediumsseite wirkt der Druck P auf den Dichtteil 8e. Durch das im Ringspalt 29 vorhandene Medium wird der Dichtteil 8e bzw. dessen Abschnitt 28 in Richtung auf die Welle 9 druckbelastet, wie durch die in Fig. 6 eingezeichneten Pfeile angedeutet ist. Mit steigendem Mediumsdruck wird somit der Dichtteil 8e stärker gegen die Welle 9 gedrückt, so daß eine einwandfreie Abdichtung gewährleistet und Lekkage zuverlässig verhindert wird. Ein auftretender Überdruck hebt infolge dieser Ausbildung den Dichtteil 8e nicht von der Welle 9 ab. Der Abschnitt 28 des Dichtteiles 8e verläuft in Richtung auf die Luftseite radial schräg nach außen, so daß er durch den Druck auf der Mediumsseite radial nach innen belastet wird. Dies hat zur Folge, daß auch der auf der Welle 9 dichtend aufliegende, in Richtung auf die Luftseite sich erstreckende Endabschnitt 27 fest gegen die Welle 9 gedrückt wird. Außerdem wird der Dichtring durch die beschriebene Ausbildung in radialer Richtung flexibler.

Fig. 7 zeigt eine Stangendichtung 1f, die wie der Dichtring 1 aus einer Ringscheibe 2f und einer Klebeschicht 3f besteht. Sie erstreckt sich etwa über die halbe radiale Breite der Scheibe 2f. Mit ihr wird der Dichtring 1f an einer Kegelfläche 30 eines Führungsgehäuses 5f für eine Kolbenstange 9f oder einem Ventilschaft befestigt. Der Dichtring 1f ist mit seinem Befestigungsteil 6f über die Klebeschicht 3f an der Fläche 30 befestigt. Der frei nach vorne über das Gehäuse 5f bzw. die Kegelfläche 30 ragende Dichtteil 8f liegt unter elastischer Vorspannung dichtend an der Kolbenstange 9f an.

Im Unterschied zu den zuvor beschriebenen Dichtringen ist die an der Stange 9f anliegende Innenseite 31 des Dichtteiles 8f glatt, also ohne Rückfördereinrichtung ausgebildet. Auch der Dichtring 1f läßt sich einfach und kostengünstig herstellen und einfach montieren. Zur Montage kann ein (nicht dargestelltes) Montagewerkzeug vorgesehen sein, das ähnlich ausgebildet ist wie die zuvor beschriebenen Montagewerkzeuge.

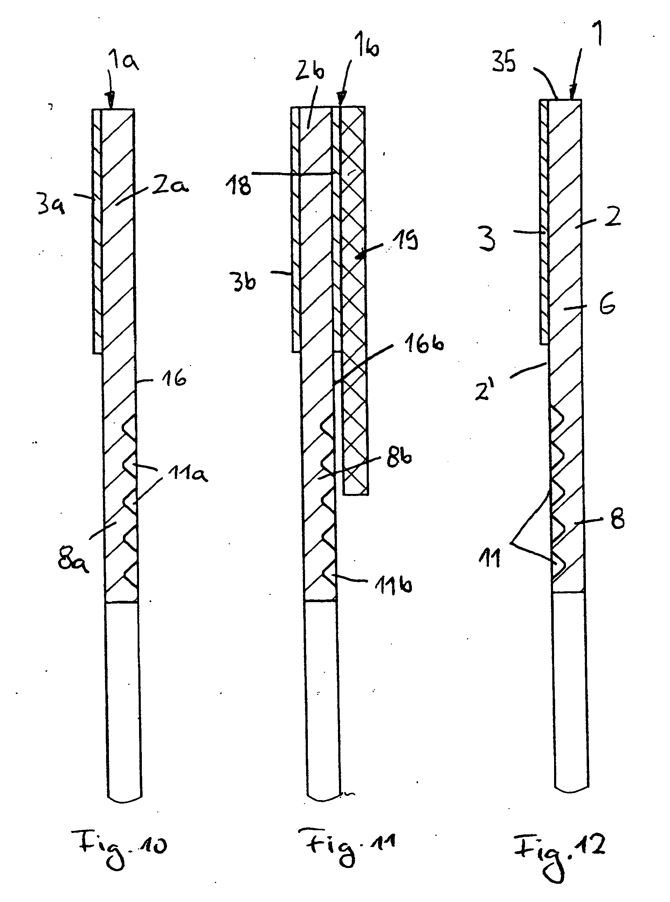

Die Fig. 8 und 9 zeigen die Möglichkeit, zur Befestigung des Dichtringes 1 am Gehäuse eine Klebeschicht 3 zu verwenden, die durch eine Schutzfolie 32 geschützt ist. Sie hat gleiche Größe wie die Klebeschicht 3, so daß diese vollständig abgedeckt ist. Die Schutzfolie 32 wird erst kurz vor der Montage des Dichtringes 1 von der Klebeschicht 3 abgezogen. Die Schutzfolie 32 kann bei allen beschriebenen Ausführungsformen verwendet werden. Vorteilhaft wird die Schutzfolie 32 eingesetzt, wenn die Klebeschicht 3 durch ein doppelseitiges Klebeband gebildet wird.

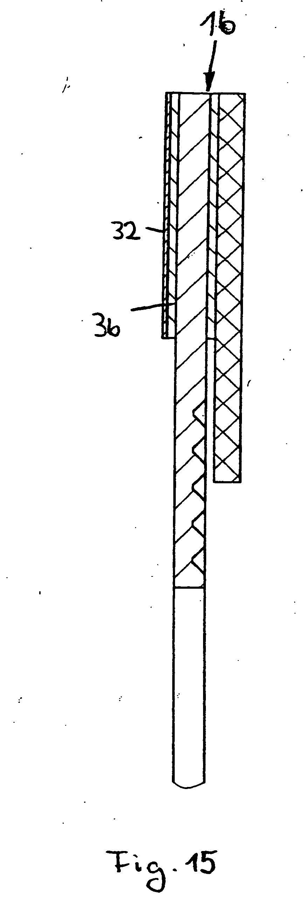

Um das Abziehen der Schutzfolie 32 zu erleichtern, kann sie mit einer radial vorstehenden Lasche 33 versehen sein, wie anhand der Schutzfolie 32g in den Fig. 13 und 14 dargestellt ist. An der Lasche 33 läßt sich die Schutzfolie 32g leicht fassen, um sie vor der Montage des Dichtringes 1a einfach und schnell von der Klebeschicht 3a abzuziehen.

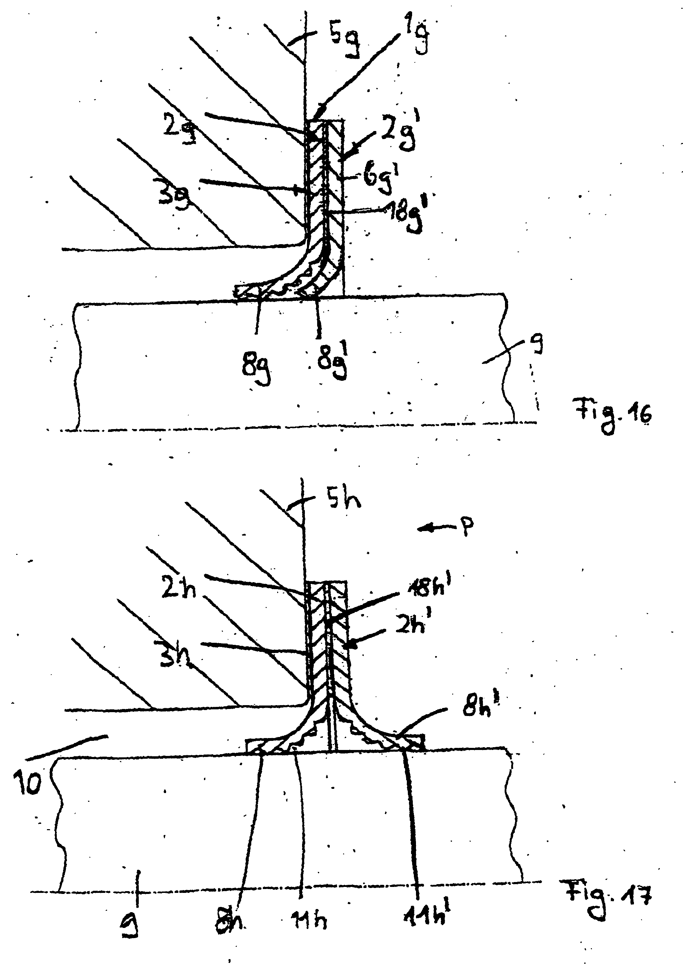

Fig. 15 zeigt den Dichtring 1 e gemäß Fig. 3 und 11, bei dem die Klebeschicht 3b ein doppelseitiges Klebeband ist, dessen Außenseite durch die Schutzfolie 32 geschützt wird. Selbstverständlich kann anstelle dieser Schutzfolie auch die Schutzfolie 32g gemäß den Fig. 13 und 14 verwendet werden.

Fig. 16 zeigt einen Dichtring 1g, der weitgehend dem nach Fig. 3 entspricht. Anstelle der Abdichtscheibe 19 ist eine weitere Ringscheibe 2g' vorgesehen, deren Dichtteil 8g' in gleicher Richtung zur Mediumsseite abgebogen ist wie das Dichtteil 8g der Ringscheibe 2g. Sie ist über die Klebeschicht 3g am Gehäuse 5g verklebt, während die Ringscheibe 2g' mit ihrem Befestigungsteil 6g' über die weitere Klebeschicht 18g' am Dichtring 2g befestigt ist. Der Dichtteil 8g' der Ringscheibe 2g' wird ebenfalls bei der Montage des Dichtringes 1g in die in Fig. 16 dargestellte Lage verformt, in der er mit dem Dichtteil 8g' dichtend an der Welle 9 anliegt. Die Dichtscheibe 2g' kann gleich ausgebildet sein wie die Dichtscheibe 2g. Sie kann aber auch, wie dargestellt, geringere - oder auch größere - Wandstärke haben und keine Rückfördereinrichtung aufweisen. Beide Dichtscheiben 2g, 2g' können aus demselben oder unterschiedlichem Werkstoff, wie Polyfluorcarbon, vorzugsweise Polytetrafluorethylen oder elastomermodifiziertem Polytetrafluorethylen oder einem Elastomer oder dergleichen bestehen.

Diese Ausführungsform hat den Vorteil, daß bei Verschleiß der ersten Dichtscheibe 2g die zweite Ringscheibe 2g' die notwendige Abdichtung gewährleistet.

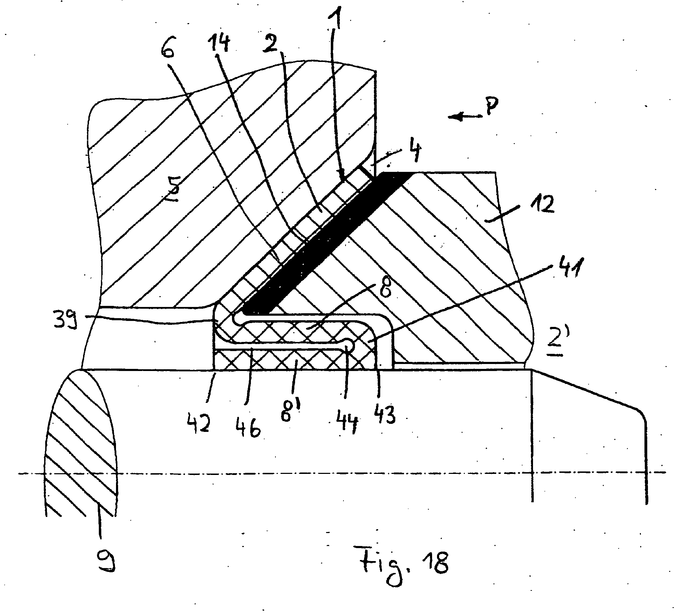

Die Ausführungsform nach Fig. 17 unterscheidet sich vom zuvor beschriebenen Ausführungsbeispiel dadurch, daß die zweite Ringscheibe 2h' spiegelsymmetrisch zur ersten Ringscheibe 2h an dieser über die Klebeschicht 18h' befestigt ist. Ferner weist die Ringscheibe 2h' an ihrem auf der Welle 9 dichtend aufliegenden Dichtteil 8h' eine Rückfördereinrichtung 11 h' auf, die gleich ausgebildet ist wie die Rückfördereinrichtung des Dichtteiles 8h der Ringscheibe 2h. Diese ist wieder über die Klebeschicht 3h am Gehäuse 5h befestigt. Wie bei der Abdichtscheibe 19 der Ausführungsform gemäß Fig. 3 ist die lichte Weite der vom Dichtteil 8h' begrenzten Ringöffnung kleiner als der Durchmesser der Welle 9. Der Dichtteil 8h' ist in entgegengesetzte Richtung, also zur Luftseite, wie der Dichtteil 8h gebogen und bildet eine Staublippe, die das Eindringen von Staub/Schmutzteilen in das Medium verhindert.

Bei der Ausführungsform nach Fig. 18 ist die Ringscheibe 2 so gebogen, daß das Befestigungsteil 6 zur Anpassung an eine konusförmige Gehäuseaufnahme 4 spitzwinklig zum axial verlaufenden Dichtteil 8, 8' geneigt ist. Dieses besteht aus einer ersten Dichtlippe 8 und einer zweiten Dichtlippe 8', die im wesentlichen parallel zueinander und zur Welle 9 verlaufen. Die zweite Dichtlippe 8' umschließt die Welle 9. Die erste Dichtlippe 8 geht mediumsseitig über einen teilkreisförmigen Biegeabschnitt 39 in das Befestigungsteil 6 und luftseitig über einen radial verlaufenden Zwischenabschnitt 41 in die zweite Dichtlippe 8' über. Sie weist mediums- und luftseitig eine primäre und eine sekundäre Dichtkante 42 und 43 auf, die die Welle 9 gegen das Medium und gegen Eindringen von Schmutzteilchen von der Luftseite aus schützen. An der Innenseite des Zwischenabschnittes 41 ist eine koaxial zur Wellenachse liegende Rille 44 zum Beispiel durch Prägen angebracht, die als Gelenk zwischen den Dichtlippen 8 und 8' wirkt und einen definierten Umlenkpunkt für die zweite Dichtlippe 8' bildet. Die Dichtlippe 8' ist nämlich durch Umbiegen der geraden Ringscheibe 2 in einem zentralen Ringabschnitt gebildet, wobei die Dichtlippe 8' um 180° radial nach außen bis zur Anlage an die erste Dichtlippe 8 rollierend umgebogen wird. Die Dichtlippen 8 und 8' sind im Ausführungsbeispiel gleich lang. Sie können selbstverständlich auch unterschiedliche Länge haben. Die zweite Dichtlippe 8' kann auch an ihrer Kontaktfläche mit der Welle 9 mit einer an sich bekannten Rückfördereinrichtung versehen sein, um eine optimale Schmierung der Welle 9 und der Dichtlippe 8' an den Kontaktflächen zu gewährleisten und damit die Reibung und die Dichtspalttemperatur zwischen der Welle und der Dichtlippe zu reduzieren. Dadurch wird auch das Risiko einer Ölkohlebildung vermieden.

Vorteilhaft ist bei dieser Ausbildung zwischen dem Werkzeug 12 und dem Befestigungsteil 6 eine elastische Auflage 45 vorgesehen, mit der Formabweichungen am Aufnahmekonus 4 des Maschinengehäuses 5 ausgeglichen werden können.

Zwischen den beiden Dichtlippen 8, 8' befindet sich ein spaltförmiger Ringraum 46, der zur Ölseite offen ist. Dadurch kann das Öl in den Ringraum 46 gelangen und die Dichtlippe 8' gegen die Welle 9 drükken. Der beschriebene Radialwellendichtring hat den Vorteil, daß er an die unterschiedlichsten Betriebsbedingungen und an Anwendungsfälle angepaßt werden kann. Er kann beispielsweise in Verbindung mit bekannten Dichtringen, bei denen nur eine zur Öl- bzw. Mediumsseite weisende Dichtlippe vorgesehen ist, eingesetzt werden. Bei dem Dichtring nach Fig. 18 ist eine Beschädigungsgefahr für die Dichtlippe 8' bei der Montage des Dichtringes auf der Welle 9 vermieden. Die Dichtlippe 8' kann auch nach der Montage des Dichtringes auf korrekte Montage sichtgeprüft werden. Es ist außerdem keine zusätzliche Staublippe erforderlich, da deren Funktion bereits durch die sekundäre Dichtkante 43 integriert ist. Außerdem ermöglicht der Dichtring eine Reduzierung der Dichtungsbauhöhe um mindestens 50 % und eine Gewichtseinsparung am abzudichtenden Aggregat bis zu mehreren Kilogramm. An der Dichtung kann eine Gewichtsersparnis um 90 % im Vergleich zu bekannten Dichtringen mit einer zur Luftseite gerichteten Dichtlippe erreicht werden. Auch eine Kosteneinsparung am Dichtring ist im Vergleich zu den bekannten Dichtringen möglich. Schließlich ist bei dem Dichtring nach Fig. 18 auch keine Bearbeitung der Dichtungsaufnahme notwendig, wodurch die teure und genaue Bearbeitung der Dichtungsaufnahmebohrung entfällt. Schließlich bleiben dem Dichtring auch die Vorteile der Dichtungen erhalten, bei denen die eine Dichtlippe zur Ölseite gerichtet ist. Die Nachteile dieser bekannten Dichtungen werden zudem vermieden. Die Vorteile der oben beschriebenen Dichtungen gegenüber den bekannten Dichtungen bestehen darin, daß die Lage der Dichtkante zur Luft- und Ölseite frei wählbar ist. Außerdem ist eine Kombination der Dichtprinzipien "Rückförderung und Dichtkante" möglich. Auch kann die Priorität einer Ölabdichtung oder die Schutzwirkung gewählt werden. Schließlich wird vermieden, daß die Dichtlippe bei Druckbeaufschlagung von der Welle abhebt, wodurch eine Druckprüfung des Aggregates ohne weitere Maßnahmen und Einsatz der Dichtung auch bei Druckbeaufschlagung möglich sind. Vorteilhaft ist ferner, daß die Dichtlippe sowohl von der Öl- als auch von der Luftseite her druckbelastet werden kann. Dadurch ergibt sich, daß die Einbaulage beliebig ist und der Dichtring bzw. die Dichtung zur Trennung von zwei Druckräumen geeignet ist.

## Patentansprüche

1. Vorrichtung mit einer Dichtanordnung sowie einem ersten, vorzugsweise ruhenden Maschinenteil (5) und einem zweiten, vorzugsweise bewegbaren Maschinenteil (9), von denen die Dichtanordnung mit einem Dichtring (1), der mit mindestens einem Befestigungsteil (6), der an dem ersten Maschinenteil (5) gehalten ist, und mit mindestens einem Dichtteil (8, 8') versehen ist, der bei montiertem Dichtring (1) an dem zweiten Maschinenteil (9) dichtend anliegt,
**dadurch gekennzeichnet, daß** der Dichtring (1) mit dem Befestigungsteil (6) und dem Dichtteil (8, 8') eine Ringscheibe ist, daß der Befestigungsteil (6) über eine Bindeschicht (3) an einem der Maschinenteile (5, 9) unmittelbar befestigt ist, und daß der über die Bindeschicht (3) radial vorstehende Dichtteil (8, 8') elastisch gebogen ist und unter Vorspannung dichtend am jeweils anderen Maschinenteil (5, 9) anliegt.

2. Vorrichtung nach Anspruch 1,
**dadurch gekennzeichnet, daß** die Bindeschicht (3) eine als Folie ausgebildete Klebeschicht ist.

3. Vorrichtung nach Anspruch 1 oder 2,
**dadurch gekennzeichnet, daß** der Befestigungsteil (6) den radial äußeren Ringabschnitt der Ringscheibe (2) bildet.

4. Vorrichtung nach einem der Ansprüche 1 bis 3,
**dadurch gekennzeichnet, daß** der Dichtteil (8, 8') den radial inneren Ringabschnitt der Ringscheibe (2) bildet.

5. Vorrichtung nach einem der Ansprüche 1 bis 4,
**dadurch gekennzeichnet, daß** sich die Bindeschicht (3) vom radial äußeren Rand (35) des Befestigungsteiles (6) aus bis etwa in halbe radiale Breite der Ringscheibe (2) erstreckt.

6. Vorrichtung nach einem der Ansprüche 1 bis 5,
**dadurch gekennzeichnet, daß** zum Schutz der Bindeschicht (3) ein Schutzteil (32) vorgesehen ist, das vorteilhaft eine Schutzfolie ist, die auf der Bindeschicht (3) befestigt, vorzugsweise aufgeklebt ist.

7. Vorrichtung nach Anspruch 6,
**dadurch gekennzeichnet, daß** das Schutzteil (32g) mindestens eine Abziehlasche (33) aufweist.

8. Vorrichtung nach einem der Ansprüche 1 bis 7,
**dadurch gekennzeichnet, daß** der Befestigungsteil (6) der Ringscheibe (2) auf beiden Seiten mindestens eine Bindeschicht (3, 18) aufweist, die vorteilhaft gleich ausgebildet sind.

9. Vorrichtung nach einem der Ansprüche 1 bis 8,
**dadurch gekennzeichnet, daß** am Befestigungsteil (6) der Ringscheibe (2) ein vorteilhaft durch eine Ringscheibe gebildetes Abdichtteil (19) befestigt ist.

10. Vorrichtung nach Anspruch 9,
**dadurch gekennzeichnet, daß** das vorteilhaft aus Vlies bestehende Abdichtteil (19) über eine Bindeschicht (18), vorzugsweise eine Klebeschicht, am Befestigungsteil (3b) gehalten ist.

11. Vorrichtung nach Anspruch 9 oder 10,
**dadurch gekennzeichnet, daß** das Abdichtteil (19) größere radiale Breite und/oder Dicke hat als die Bindeschicht (18).

12. Vorrichtung nach einem der Ansprüche 9 bis 11,
**dadurch gekennzeichnet, daß** die lichte Weite der Ringöffnung des Abdichtteiles (19) geringfügig größer ist als der Durchmesser des abzudichtenden Maschinenteiles (9).

13. Vorrichtung nach einem der Ansprüche 9 bis 12,
**dadurch gekennzeichnet, daß** die lichte Weite der Ringöffnung des Abdichtteiles (2h') kleiner ist als der Durchmesser des abzudichtenden Maschinenteiles (9).

14. Vorrichtung nach einem der Ansprüche 1 bis 13,
**dadurch gekennzeichnet, daß** die Ringscheibe (2) mindestens eine umlaufende Sicke (25) aufweist, der ein umlaufender Vorsprung (23) in einer Anschlußwand (7) des Maschinenteiles (5) zugeordnet ist.

15. Vorrichtung nach einem der Ansprüche 1 bis 14,
**dadurch gekennzeichnet, daß** der Dichtteil (8, 8') mindestens eine Rückfördereinrichtung (11) für das abzudichtende Medium aufweist.

16. Vorrichtung nach einem der Ansprüche 1 bis 15,
**dadurch gekennzeichnet, daß** die Ringscheibe (2) aus Polyfluorcarbon, wie Polytetrafluorethylen, elastomermodifiziertem Polytetrafluorethylen, Elastomer oder dergleichen, besteht und vorteilhaft zumindest an ihrem Befestigungsbereich plasmabehandelt, insbesondere plasmageätzt ist.

17. Vorrichtung nach einem der Ansprüche 1 bis 16,
**dadurch gekennzeichnet, daß** das Dichtteil eine erste und eine zweite, vorteilhaft aufeinander liegende Dichtlippe (8 und 8') aufweist, die in entgegengesetzte Richtungen weisen.

18. Vorrichtung nach Anspruch 17,
**dadurch gekennzeichnet, daß** die erste Dichtlippe (8) zur Luftseite und die zweite Dichtlippe (8') zur Mediumsseite weist.

19. Vorrichtung nach Anspruch 17 oder 18,
**dadurch gekennzeichnet, daß** die erste und zweite Dichtlippe (8, 8') über eine Gelenkstelle (44) ineinander übergehen.

20. Vorrichtung nach Anspruch 18 oder 19,
**dadurch gekennzeichnet, daß** die zweite Dichtlippe (8') eine primäre und/oder sekundäre Dichtkante (42, 43) aufweist.

21. Vorrichtung nach einem der Ansprüche 17 bis 20,
**dadurch gekennzeichnet, daß** die erste und die zweite Dichtlippe (8, 8') etwa gleiche Länge und/oder Dicke haben.

22. Vorrichtung nach einem der Ansprüche 17 bis 21,
**dadurch gekennzeichnet, daß** die zweite Dichtlippe (8') durch Biegen, vorzugsweise Rollieren, in ihre Dichtlage verformt ist.

23. Vorrichtung nach einem der Ansprüche 17 bis 22,
**dadurch gekennzeichnet, daß** zwischen den beiden Dichtlippen (8, 8') ein Ringraum (46) vorgesehen ist, der gegen die Luftseite geschlossen und gegen die Mediumsseite offen ist.

24. Vorrichtung nach einem der Ansprüche 1 bis 23,
**dadurch gekennzeichnet, daß** zu seiner Montage zwischen dem Befestigungsteil (6) der Ringscheibe (2) und dem Montagewerkzeug (12) eine vorzugsweise elastische Auflage (45) angeordnet ist.

25. Verfahren zur Montage eines Dichtringes (1) der Vorrichtung nach einem der Ansprüche 1 bis 24, bei dem mit einem Werkzeug (12) der Dichtring (1) in seine Einbaulage gebracht wird,
**dadurch gekennzeichnet, daß** das Werkzeug (12) eine Heizeinrichtung (15) aufweist, mit der die Bindeschicht (3) bei gleichzeitigem Anpressen des Dichtringes (1) an die Befestigungsfläche (7) des Maschinenteiles (5, 9) erhitzt wird.

26. Verfahren nach Anspruch 25,
**dadurch gekennzeichnet, daß** der Dichtring (1) während des Anpressens und Erhitzens durch Unterdruck gehalten wird.

27. Verfahren nach Anspruch 25 oder 26,
**dadurch gekennzeichnet, daß** der Dichtring (1) am Werkzeug (12) unter Saugkraft gehalten wird.

28. Verfahren nach einem der Ansprüche 25 bis 27,
**dadurch gekennzeichnet, daß** der Dichtring in einer stirnseitigen Vertiefung (21) des Werkzeuges (12c) angeordnet wird.

## Claims

1. An apparatus with a sealing device and a first, preferably stationary, machine part (5) and a second, preferably movable, machine part (9), of which the sealing device [is provided] with a sealing ring (1), which is provided with at least one fastening part (6) which is held on the first machine part (5), and with at least one sealing part (8, 8'), which rests in a sealed manner against the second machine part (9) when the sealing ring (1) is assembled, **characterized in that** the sealing ring (1) with the fastening part (6) and the sealing part (8, 8') is an annular disc, the fastening part (6) is fastened directly to one of the machine parts (5, 9) by way of a bonding layer (3), and the sealing part (8, 8') projecting radially beyond the bonding layer (3) is bent in a resilient manner and rests with pre-stressing against the other machine part (5, 9) in each case in a sealed manner.

2. An apparatus according to Claim 1, **characterized in that** the bonding layer (3) is an adhesive layer in the form of a film.

3. An apparatus according to Claim 1 or 2, **characterized in that** the fastening part (6) forms the radially outer annular portion of the annular disc (2).

4. An apparatus according to any one of Claims 1 to 3, **characterized in that** the sealing part (8, 8') forms the radially inner annular portion of the annular disc (2).

5. An apparatus according to any one of Claims 1 to 4, **characterized in that** the bonding layer (3) extends from the radially outer edge (35) of the fastening part (6) to substantially half the radial width of the annular disc (2).

6. An apparatus according to any one of Claims 1 to 5, **characterized in that** a protective part (32), which is advantageously a protective film which is fastened, and preferably secured by adhesion, to the bonding layer (3), is provided in order to protect the bonding layer (3).

7. An apparatus according to Claim 6, **characterized in that** the protective part (32g) has at least one pull-off strip (33).

8. An apparatus according to any one of Claims 1 to 7, **characterized in that** the fastening part (6) of the annular disc (2) has at least one bonding layer (3, 18) on both sides, the bonding layers (3, 18) advantageously being designed in the same way.

9. An apparatus according to any one of Claims 1 to 8, **characterized in that** a sealing part (19) advantageously formed by an annular disc is fastened to the fastening part (6) of the annular disc (2).

10. An apparatus according to Claim 9, **characterized in that** the sealing part (19) advantageously consisting of non-woven material is held on the fastening part (3b) by way of a bonding layer (18), preferably an adhesive layer.

11. An apparatus according to Claim 9 or 10, **characterized in that** the sealing part (19) has a greater radial width and/or thickness than the bonding layer (18).

12. An apparatus according to any one of Claims 9 to 11, **characterized in that** the internal width of the annular opening of the sealing part (19) is slightly larger than the diameter of the machine part (9) to be sealed off.

13. An apparatus according to any one of Claims 9 to 12, **characterized in that** the internal width of the annular opening of the sealing part (2h') is smaller than the diameter of the machine part (9) to be sealed off.

14. An apparatus according to any one of Claims 1 to 13, **characterized in that** the annular disc (2) has at least one continuous bead (25) with which a continuous projection (23) in an attachment wall (7) of the machine part (5) is associated.

15. An apparatus according to any one of Claims 1 to 14, **characterized in that** the sealing part (8, 8') has at least one returning device (11) for the medium to be sealed off.

16. An apparatus according to any one of Claims 1 to 15, **characterized in that** the annular disc (2) consists of polyfluorocarbon, such as polytetrafluoroethylene, elastomer-modified polytetrafluoroethylene, elastomer or the like, and is advantageously plasma-treated, and in particular reactive-ion etched, at least on its fastening region.

17. An apparatus according to any one of Claims 1 to 16, **characterized in that** the sealing part has a first and a second sealing lip (8 and 8') which are advantageously arranged one upon the other and which point in opposite directions.

18. An apparatus according to Claim 17, **characterized in that** the first sealing lip (8) points towards the air side and the second sealing lip (8') points towards the medium side.

19. An apparatus according to Claim 17 or 18, **characterized in that** the first and second sealing lips (8, 8') merge into each other by way of an articulation point (44).

20. An apparatus according to Claim 18 or 19, **characterized in that** the second sealing lip (8') has a primary and/or a secondary sealing edge (42, 43).

21. An apparatus according to any one of Claims 17 to 20, **characterized in that** the first and the second sealing lip (8, 8') have a substantially equal length and/or thickness.

22. An apparatus according to any one of Claims 17 to 21, **characterized in that** the second sealing lip (8') is deformed into its sealing position by bending, and preferably by rolling.

23. An apparatus according to any one of Claims 17 to 22, **characterized in that** an annular space (46), which is closed towards the air side and open towards the medium side, is provided between the two sealing lips (8, 8').

24. An apparatus according to any one of Claims 1 to 23, **characterized in that** a preferably resilient covering (45) is arranged between the fastening part (6) of the annular disc (2) and the assembly tool (12) for the purpose of its assembly.

25. A method of assembling a sealing ring (1) of the apparatus according to any one of Claims 1 to 24, in which the sealing ring (1) is moved into its fitting position by a tool (12), **characterized in that** the tool (12) has a heating device (15) by which the bonding layer (3) is heated at the same time as the sealing ring (1) is pressed onto the fastening face (7) of the machine part (5, 9).

26. A method according to Claim 25, **characterized in that** the sealing ring (1) is held by under-pressure during the pressing-on and heating.

27. A method according to Claim 25 or 26, **characterized in that** the sealing ring (1) is held on the tool (12) by suction force.

28. A method according to any one of Claims 25 to 27, **characterized in that** the sealing ring (1) is arranged in a depression (21) on an end face of the tool (12c).

## Revendications

1. Appareil comprenant un agencement d'étanchement, une première partie de machine (5), de préférence stationnaire, et une seconde partie de machine (9), de préférence déplaçable, parmi lesquels l'agencement d'étanchement comprend une bague d'étanchement (1), qui est pourvue d'au moins une partie de fixation (6), laquelle est maintenue sur la première partie de machine (5), et d'au moins une partie d'étanchement (8, 8'), laquelle s'applique avec étanchement contre la seconde partie de machine (9) lorsque la bague d'étanchement (1) est montée,
**caractérisé en ce que** la bague d'étanchement (1) avec la partie de fixation (6) et la partie d'étanchement (8, 8') est un disque annulaire, **en ce que** la partie de fixation (6) est fixée directement sur l'une des parties de machine (5, 9) via une couche de liaison (3), et **en ce que** la partie d'étanchement (8, 8') qui dépasse radialement au-delà de la couche de liaison (3) est cintrée élastiquement et s'applique sous précontrainte avec étanchement contre l'autre partie de machine (5, 9) respective.

2. Appareil selon la revendication 1,
**caractérisé en ce que** la couche de liaison (3) est une couche de colle réalisée sous forme de feuille.

3. Appareil selon la revendication 1 ou 2,
**caractérisé en ce que** la partie de fixation (6) forme le tronçon annulaire radialement extérieur du disque annulaire (2).

4. Appareil selon l'une des revendications 1 à 3,
**caractérisé en ce que** la partie d'étanchement (8, 8') forme le tronçon annulaire radialement intérieur du disque annulaire (2).

5. Appareil selon l'une des revendications 1 à 4,
**caractérisé en ce que** la couche de liaison (3) s'étend depuis la bordure (35) radialement extérieure de la partie de fixation (6) jusqu'à environ la moitié de la largeur radiale du disque annulaire (2).

6. Appareil selon l'une des revendications 1 à 5,
**caractérisé en ce que**, pour la protection de la couche de liaison (3), il est prévu une partie de protection (32), laquelle est de préférence une feuille protectrice qui est fixée, de préférence collée, sur la couche de liaison (3).

7. Appareil selon la revendication 6,
**caractérisé en ce que** la partie de protection (32g) comprend au moins une patte de pelage (33).

8. Appareil selon l'une des revendications 1 à 7,
**caractérisé en ce que** la partie de fixation (6) du disque annulaire (2) comporte sur les deux côtés au moins une couche de liaison (3, 18), lesquelles sont avantageusement réalisées identiques.

9. Appareil selon l'une des revendications 1 à 8,
**caractérisé en ce qu'**une partie d'étanchement (19), réalisée avantageusement par un disque annulaire, est fixée sur la partie de fixation (6) du disque annulaire (2).

10. Appareil selon la revendication 9,
**caractérisé en ce que** la partie d'étanchement (19), réalisée avantageusement en non-tissé, est maintenue sur la partie de fixation (3b) via une couche de liaison (18), de préférence une couche de colle.

11. Appareil selon la revendication 9 ou 10,
**caractérisé en ce que** la partie d'étanchement (19) présente une largeur radiale et/ou une épaisseur plus élevée que la couche de liaison (18).

12. Appareil selon l'une des revendications 9 à 11,
**caractérisé en ce que** la largeur libre de l'ouverture annulaire de la partie d'étanchement (19) est légèrement supérieure au diamètre de la partie de machine (9) à étancher.

13. Appareil selon l'une des revendications 9 à 12,
**caractérisé en ce que** la largeur libre de l'ouverture annulaire de la partie d'étanchement (2h') est inférieure au diamètre de la partie de machine (9) à étancher.

14. Appareil selon l'une des revendications 1 à 13,
**caractérisé en ce que** le disque annulaire (2) comprend au moins une moulure périphérique (25), à laquelle est associée une saillie périphérique (23) dans une paroi de raccordement (7) de la partie de machine (5).

15. Appareil selon l'une des revendications 1 à 14,
**caractérisé en ce que** la partie d'étanchement (8, 8') comprend au moins un agencement de refoulement (11) pour le fluide à étancher.

16. Appareil selon l'une des revendications 1 à 15,
**caractérisé en ce que** le disque annulaire (2) et en polyfluorocarbone, comme polytétrafluoroéthylène, polytétrafluoroéthylène modifié élastomère, élastomère ou similaire, et est de préférence traité au plasma, en particulier attaqué au plasma, au moins au niveau de sa zone de fixation.

17. Appareil selon l'une des revendications 1 à 16,
**caractérisé en ce que** la partie d'étanchement comporte une première et une seconde lèvres d'étanchéité (8 et 8'), avantageusement appliquées l'une contre l'autre, qui sont dirigées dans des directions opposées.

18. Appareil selon la revendication 17,
**caractérisé en ce que** la première lèvre d'étanchéité (8) est tournée vers le côté air, et la seconde lèvre d'étanchéité (8') est tournée vers le côté fluide.

19. Appareil selon la revendication 17 ou 18,
**caractérisé en ce que** la première et la seconde lèvre d'étanchéité (8, 8') se transforment l'une dans l'autre via un emplacement d'articulation (44).

20. Appareil selon la revendication 18 ou 19,
**caractérisé en ce que** la seconde lèvre d'étanchéité (8') présente une arête d'étanchéité primaire et/ou secondaire (42, 43).

21. Appareil selon l'une des revendications 17 à 20,
**caractérisé en ce que** la première et la seconde lèvre d'étanchéité (8, 8') ont approximativement la même longueur et/ou la même épaisseur.

22. Appareil selon l'une des revendications 17 à 21,
**caractérisé en ce que** la seconde lèvre d'étanchéité (8') est déformée dans sa position d'étanchement par flexion, de préférence par roulement.

23. Appareil selon l'une des revendications 17 à 22,
**caractérisé en ce qu'**il est prévu une chambre annulaire (46) entre les deux lèvres d'étanchéité (8, 8'), qui est fermée du côté air et qui est ouverte du côté fluide.

24. Appareil selon l'une des revendications 1 à 23,
**caractérisé en ce que**, pour son montage entre la partie de fixation (6) du disque annulaire (2) et l'outil de montage (12), est agencé un appui (45), de préférence élastique.

25. Procédé pour le montage d'une bague d'étanchement (1) de l'appareil selon l'une des revendications 1 à 24, dans lequel la bague d'étanchement (1) est amenée dans sa position de montage au moyen d'un outil (12),
**caractérisé en ce que** l'outil (12) comprend un moyen de chauffage (15) à l'aide duquel la couche de liaison (3) est chauffée avec pressage simultané de la bague d'étanchement (1) sur la surface de fixation (7) de la partie de machine (5, 9).

26. Procédé selon la revendication 25,
**caractérisé en ce que**, pendant le pressage et le chauffage, la bague d'étanchement (1) est maintenue sous dépression.

27. Procédé selon la revendication 25 ou 26,
**caractérisé en ce que** la bague d'étanchement (1) est maintenue sur l'outil (12) sous une force de succion.

28. Procédé selon l'une des revendications 25 à 27,
**caractérisé en ce que** la bague d'étanchement est agencée dans un renfoncement (21) frontal de l'outil (12c).
